**Europäisches Patentamt**

**European Patent Office**

**Office européen des brevets**

(19)

(11) Veröffentlichungsnummer : **0 370 345 B1**

(12)

# EUROPÄISCHE PATENTSCHRIFT

(45) Veröffentlichungstag der Patentschrift :
**07.01.93 Patentblatt 93/01**

(51) Int. Cl.$^5$ : **C08L 51/08,** C08L 51/04,
C08L 25/12, C08L 33/12

(21) Anmeldenummer : **89120975.1**

(22) Anmeldetag : **11.11.89**

(54) Alterungsbeständige Polymerlegierungen.

(30) Priorität : **24.11.88 DE 3839584**

(43) Veröffentlichungstag der Anmeldung :
**30.05.90 Patentblatt 90/22**

(45) Bekanntmachung des Hinweises auf die
Patenterteilung :
**07.01.93 Patentblatt 93/01**

(84) Benannte Vertragsstaaten :
**DE ES FR GB IT NL**

(56) Entgegenhaltungen :
**EP-A- 0 154 244
EP-A- 0 220 160**

(56) Entgegenhaltungen :
**EP-A- 0 249 964
EP-A- 0 260 552
DE-A- 2 547 508
JP-A-47 030 751**

(73) Patentinhaber : **BAYER AG
W-5090 Leverkusen 1 Bayerwerk (DE)**

(72) Erfinder : **Eichenauer, Herbert, Dr.
Gustav-Heinemann-Strasse 3
W-4047 Dormagen 1 (DE)**
Erfinder : **Pischtschan, Alfred, Dr.
Zur Eiche 33
W-5067 Kürten (DE)**
Erfinder : **Lindner, Christian, Dr.
Im Wasserblech 11
W-5000 Köln 91 (DE)**

EP 0 370 345 B1

## Beschreibung

Die Erfindung betrifft Polymerlegierungen mit guter Witterungs- und Alterungsbeständigkeit, guter Verarbeitbarkeit und hoher Zähigkeit bei tiefer Temperatur.

Polymerlegierungen mit guter Alterungsbeständigkeit sind bekannt, z.B. Pfropfpolymerisate auf Basis von vernetzten Acrylatkautschuken in Kombination mit einem thermoplastischen Harz, sogenannte ASA-Polymere (vgl. z.B. DE-AS 1 260 135, DE-OS 1 911 882, DE-OS 2 826 925, EP-A 71 098) und Pfropfpolymerisate auf Basis von Ethylen/Propylen/Dien-Kautschuken (EPDM-Kautschuke) in Kombination mit einem thermoplastischen Harz, sogenannte AES-Polymere (vgl. z.B. DE-OS 2 830 232, DE-A 3 001 766, EP-A 121327, EP-OS OS 134154).

Während sowohl ASA- als auch AES-Polymer gute Zähigkeiten bei Zimmertemperatur aufweisen, fällt die Zähigkeit mit sinkender Temperatur schnell ab und führt letztlich bei Temperaturen zwischen ca. 0°C und -40°C zum Sprödbruch.

Es wurde gefunden, daß thermoplastische Polymerlegierungen mit sehr guter Witterungsbeständigkeit bei gleichzeitig hoher Zähigkeit bei tiefer Temperatur erhalten werden, wenn AES-Systeme mit spezieller Teilchengröße der Kautschukphase mit Pfropfprodukten auf Basis von Silikonkautschuk mit spezieller Teilchengröße kombiniert werden Die dabei resultierenden Polymerlegierungen zeichnen sich außerdem durch eine verbesserte thermoplastische Verarbeitbarkeit aus.

Gegenstand der vorliegenden Erfindung sind thermoplastische Formmassen aus

A) 5 bis 95 Gew.-%, vorzugsweise 20 bis 80 Gew.-%, eines Pfropfproduktes eines Gemisches von 50 bis 100 Gew.-Teilen, vorzugsweise 60 bis 95 Gew.-Teilen, Styrol, $\alpha$-Methylstyrol, Vinyltoluol, vorzugsweise p-Methylstyrol, Methylmethacrylat oder Mischungen daraus und 0 bis 50 Gew.-Teilen, vorzugsweise 5 bis 40 Gew.-Teilen, Acrylnitril auf einen teilchenförmigen Silikonkautschuk mit einem mittleren Teilchendurchmesser ($d_{50}$) von 0,10 bis 0,50 $\mu$m, vorzugsweise von 0,10 bis 0,15 $\mu$m oder von 0,25 bis 0,50 $\mu$m, mit einem Gesamtkautschukgehalt von 30 bis 90 Gew.-%, vorzugsweise von 40 bis 80 Gew.-% und

B) 95 bis 5 Gew.-%, vorzugsweise 80 bis 20 Gew.-% eines Pfropfproduktes eines Gemisches von 50 bis 100 Gew.-Teilen Styrol, $\alpha$-Methylstyrol, Vinyltoluol, vorzugsweise p-Methylstyrol, Methylmethacrylat oder Mischungen daraus und 0 bis 50 Gew.-Teilen, vorzugsweise 5 bis 40 Gew.-Teilen, Acrylnitril, auf einen teilchenförmigen EPDM-Kautschuk mit einem mittleren Teilchendurchmesser ($d_{50}$) von 10 0,20 bis 1,00 $\mu$m, vorzugsweise von 0,25 bis 0,40 $\mu$m oder von 0,35 bis 0,60 $\mu$m, mit einem Gesamtkautschukgehalt von 10 bis 50 Gew.%, vorzugsweise von 10 bis 40 Gew.-%.

Die zur Erzeugung der erfindungsgemäßen Formmassen verwendbaren Pfropfprodukte von Silikonkautschuk (A) werden erhalten, indem Vinylmonomere oder Vinylmonomerengemische in Gegenwart von Silikonkautschuk, insbesondere in Gegenwart von in Emulsionsform vorliegendem Silikonkautschuk radikalisch polymerisiert werden, wobei zumindest ein Teil der Monomeren auf den Kautschuk aufgepfropft wird. Geeignete Vinylmonomere sind beispielsweise Styrol, kern- oder seitenkettensubstituierte Styrole, insbesondere p-Methylstyrol und $\alpha$-Methylstyrol, halogensubstituierte Styrole, z.B. Chlor- oder Bromstyrol, Vinylnaphthalin, Derivate von $\alpha$, $\beta$-ungesättigten Mono- oder Dicarbonsäuren, so insbesondere $C_{1-5}$-Alkylester von Acrylsäure oder Methacrylsäure, vorzugsweise Methylmethacrylat, oder die Nitrile von Acrylsäure oder Methacrylsäure, Maleinsäureanhydrid, N-Phenylmaleinimid oder Mischungen daraus.

Bevorzugtes Monomerengemisch ist eine Kombination aus Styrol und/oder $\alpha$-Methylstryol und Acrylnitril, vorzugsweise im Gewichtsverhältnis ($\alpha$-Methyl)Styrol: Acrylnitril = 1:1 bis 10:1.

Geeignete Silikonkautschuke sind beispielsweise die in DE-OS 3 629 763 beschriebenen Verbindungen, die im wesentlichen aus chemisch verbundenen Siloxan-Gruppen der allgemeinen Formeln $R_2SiO$, $RSiO_{3/2}$, $R_2R^3SiO_{1/2}$, $SiO_{4/2}$, $R^1CH=CH-(R^2)-$ und $H-S-$ mit R = einwertiger, gesättigter Kohlenwasserstoffrest, insbesondere $CH_3$, Phenyl, $C_2H_5$, gegebenenfalls durch SH, Halogen, $C_1-C_6$-Oxyalkyl-substituiert, $R^1$ = H, $C_1-C_6$-Alkyl, insbesondere H, $CH_3$, $R^2$ = Einfachbindung, $C_1-C_4$-Alkylen, insbesondere $-CH_2-$, $-C_2H_4$, Einfachbindung, $R^3$ = R oder OH aufgebaut sind und wobei bevorzugt auf 100 Mol-Einheiten der Formel $R_2SiO$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind.

Weitere geeignete Silikonkautschuke haben Kern/Mantel-Aufbau; Beispiele sind teilchenförmige Silikonkautschuke, die von einem Mantel aus vernetztem Acrylatkautschuk umhüllt sind (vgl. DE-OS 3 617 267) oder teilchenförmige Silikonkautschuke, die einen Kern aus vernetztem Acrylatkautschuk (vgl. DE-OS 3 720 475) oder aus einem Styrol/ Acrylnitril-Copolymerisat (vgl. DE-OS 3 720 476) haben. Bevorzugt werden die Pfropfprodukte A durch Emulsionspolymerisation hergestellt, wobei in Emulsionsform vorliegende, zumindest teilweise vernetzte Silikonkautschuke als Pfropfgrundlage eingesetzt werden.

Derartige Pfropfpolymerisationen sind bekannt, vorzugsweise werden sie bei Temperaturen zwischen

2

30°C und 100°C unter Verwendung radikalischer Initiatoren durchgeführt, wie organischer oder anorganischer Peroxide, anorganischer Persulfate, z.B. Kaliumpersulfat, Azoinitiatoren, z.B. Azobisiisobutyronitril, sowie Redox-Systemen, die aus einem Oxidationsmittel, vorzugsweise einem Peroxid und einem Reduktionsmittel bestehen und gegebenenfalls unter Zusatz von wäßriger Emulgatorlösung (z.B. anionische oder nichtionische Emulgatoren, vorzugsweise Natrium-, Kalium- oder Ammoniumsalze langkettiger Carbonsäuren mit 10 bis 20 C-Atomen, z.B. Kaliumoleat, Alkylsulfate mit 10 bis 20 C-Atomen, Alkylsulfonate mit 10 bis 20 C-Atomen oder Alkali- bzw. Ammoniumsalze der disproportionierten Abietinsäure). Die Polymerisation kann diskontinuierlich oder kontinuierlich geführt werden, auch Monomerzulauf ist möglich.

Außer durch Emulsionspolymerisation ist die Herstellung der Pfropfprodukte prinzipiell jedoch auch durch Suspensions-, Lösungs- oder Massepolymerisation sowie Kombinationen dieser Verfahren in an sich bekannter Weise möglich.

Die Pfropfprodukte auf Basis von Silikonkautschuken A) weisen einen Kautschukgehalt von 30 bis 90 Gew.-%, vorzugsweise von 40 bis 80 Gew.-% auf. Die mittleren Teilchendurchmesser ($d_{50}$-Werte) der Silikonkautschuke sind 0,10 bis 0,50 μm, vorzugsweise 0,10 bis 0,15 μm und 0,25 bis 0,50 μm.

Die zur Erzeugung der erfindungsgemäßen Formmassen verwendeten Pfropfprodukte auf Basis von EPDM-Kautschuk (B) werden erhalten, indem Vinylmonomere oder Vinylmonomerengemische in Gegenwart von EPDM-Kautschuk radikalisch polymerisiert werden, wobei zumindest ein Teil der Monomeren auf den Kautschuk aufgepfropft wird. Geeignete Vinylmonomere sind beispielsweise Styrol, α-Methylstyrol, kernsubstituierte Styrole, wie z.B. p-Methylstyrol, $C_1$-$C_5$-Alkylester von Acrylsäure oder Methacrylsäure vorzugsweise Methylmethacrylat, Maleinsäureanhydrid, N-Phenylmaleinimid oder Mischungen daraus.

Bevorzugtes Monomerengemisch ist eine Kombination aus Styrol und/oder α--Methylstyrol und Acrylnitril, vorzugsweise im Gewichtsverhältnis (α-Methyl)Styrol: Acrylnitril = 1:1 bis 10:1.

Geeignete EPDM-Kautschuke sind z.B. Polymerisate aus Ethylen und Propylen, die zusätzlich geringe Mengen eines nichtkonjugierten Diens, z.B. Dicyclopentadien, Ethylidennorbornen, 1,4-Hexadien, 1,4-Cycloheptadien, 1,5-Cyclooctadien enthalten.

Die Herstellung dieser Pfropfprodukte ist bekannt; sie kann in Suspension oder Lösung (siehe z.B. Beispiele in EP-A 227 855) oder Emulsion (vgl. EP-A 264 721) durchgeführt werden.

Die Pfropfprodukte auf Basis von EPDM-Kautschuken weisen einen Kautschukgehalt von 10 bis 50 Gew.-%, vorzugsweise von 10 bis 40 Gew.-% auf.

Die mittleren Teilchendurchmesser ($d_{50}$-Werte) der Polymerisate sind 0,20 bis 1,00 μm, vorzugsweise 0,25 bis 0,40 μm oder 0,35 bis 0,60 μm.

Besonders vorteilhafte Eigenschaften, insbesondere hohe Zähigkeit bei tiefer Temperatur und gleichzeitig gute thermoplastische Verarbeitbarkeit, werden erreicht, wenn Pfropfprodukte mit ausgewählten Teilchengrößen miteinander kombiniert werden und zwar entweder

I) Pfropfprodukte auf Basis von Silikonkautschuk (A) mit mittleren Teilchendurchmessern von 0,25 bis 0,50 μm mit Pfropfprodukten auf Basis von EPDM-Kautschuk (B) mit mittleren Teilchendurchmessern von 0,25 bis 0,40 μm

oder

II) Pfropfprodukte auf Basis von Silikonkautschuk (A) mit mittleren Teilchendurchmessern von 0,10 bis 0,15 μm mit Pfropfprodukten auf Basis von EPDM-Kautschuk mit (B) mittleren Teilchendurchmessern von 0,35 bis 0,60 μm.

Die erfindungsgemäßen Formmassen können erzeugt werden, indem man ihre Bestandteile A) und B) miteinander bei höheren Temperaturen, insbesondere bei 100°C bis 280°C, z.B. in Knetern, auf Walzenstühlen oder Schneckenmaschinen mischt. Fallen A) und B) als Suspensionen, Lösungen oder Emulsionen an, so kann man diese mischen und gemeinsam aufarbeiten.

Den Formmassen können übliche Additive, wie z.B. Antioxidantien, Gleitmittel, Flammschutzmittel, Füllstoffe, Pigmente, Antistatika in üblichen Mengen zugesetzt werden.

Die erfindungsgemäßen Mischungen sind alterungsbeständige thermoplastische Formmassen mit sehr guter Zähigkeit bei tiefen Temperaturen und guter Verarbeitbarkeit bei Verarbeitung durch Extrusion, Kalandrierung und Spritzguß.

Sie können zu alterungsbeständigen Formkörpern verarbeitet werden, sind jedoch auch als Modifikatoren für andere Kunststoffe geeignet, insbesondere für spröde Vinylmonomerharze, wie Styrol/Acrylnitril-Copolymerisate (SAN-Harze), α-Methylstyrol/Acrylnitril-Copolymerisate, Polystyrol, Polymethylmethacrylat, Polyvinylchlorid.

Dabei beträgt ihre Menge im allgemeinen 5 bis 80 Gew.-%, vorzugsewise 10 bis 70 Gew.-%, bezogen auf das gesamte modifizierte Produkt.

Eine besonders bevorzugte Mischung dieser Art besteht aus 5 bis 80 Gew.-%, bevorzugt 10 bis 70 Gew.-%, der erfindungsgemäßen Legierung und 95 bis 20 Gew.-%, bevorzugt 90 bis 30 Gew.-% eines thermopla-

EP 0 370 345 B1

stischen Harzes aus 5 bis 40 Gew.-Teilen Acrylnitril und 95 bis 60 Gew.-Teilen Styrol, $\alpha$-Methylstyrol, p-Methylstyrol, Methylmethacrylat oder Mischungen daraus.

Diese Harze sind bekannt. Sie werden häufig als SAN-Harze bezeichnet. Man kann sie mit dem Gemisch der Pfropfpolymerisate vereinigen, indem man sie beim Vermischen der Pfropfpolymerisate zugibt. Dabei müssen die Harze in der gleichen physikalischen Form (Feststoff, Latex, Lösung) vorliegen wie die Pfropfpolymerisate. Man kann auch feste Harze auf Innenmischern und Extrudern mit fertigen Mischungen der Pfropfpolymerisate oder nacheinander mit den beiden Pfropfpolymerisat-Komponenten mischen.

Teilchengröße bedeutet immer mittlerer Teilchendurchmesser $d_{50}$, ermittelt mit der Ultrazentrifuge nach W. Scholtan et al., Kolloid-Z. u. Z. Polymere 250 (1972), 782-796.

Beispiele und Vergleichsbeispiele

Eingesetzte Polymerisate

A) Pfropfprodukt auf Basis eines Silikonkautschuks mit mittlerem Teilchendurchmesser ($d_{50}$) von 135 nm.

Herstellung der Silikonkautschukemulsion:

38,4 Gew.-Teile Octamethylcyclotetrasiloxan, 1,2 Gew.-Teile Tetramethyltetravinylcyclotetrasiloxan und 1 Gew.-Teil $\gamma$-Mercaptopropylmethyldimethoxysilan werden miteinander verrührt 1,00 Gew.-Teile Dodecylbenzolsulfonsäure werden zugeführt und anschließend 58,4 Gew.-Teile Wasser innerhalb 1 Stunde zugegeben, wobei intensiv gerührt wird. Die Voremulsion wird mit Hilfe einer Hochdruckemulgiermaschine zweimal bei ca. 220 bar homogenisiert. Danach werden weitere 0,5 Gew.-Teile Dodecylbenzolsulfonsäure hinzugegeben. Die Emulsion wird 2 Stunden bei 85°C und anschließend 36 Stunden bei Zimmertemperatur gerührt, und dann mit 5 n NaOH neutralisiert. Es resultiert eine stabile Emulsion mit einem Feststoffgehalt von ca. 36 %. Der mittlere Teilchendurchmesser ($d_{50}$) ist 135 nm.

Pfropfreaktion: In einem Reaktor werden vorgelegt:

2107 Gew.-Teile des oben beschriebenen Latex

1073 Gew.-Teile Wasser

Nach Initiierung mittels einer Lösung von 7,5 Gew.-Teilen Kaliumperoxodisulfat in 195 Gew.-Teilen Wasser bei 65°C werden folgende Lösungen innerhalb von 4 Stunden gleichmäßig in den Reaktor eingespeist:

Lösung 1: 540 Gew.-Teile Styrol

210 Gew-Teile Acrylnitril

Lösung 2: 375 Gew.-Teile Wasser

15 Gew.-Teile Natriumsalz von $C_{14}$-$C_{18}$-Alkylsulfonsäuren

Anschließend wird innerhalb von 4 Stunden bei 65°C auspolymerisiert. Es resultiert ein Latex mit einem Feststoffgehalt von ca. 33 Gew.-%. Nach Koagulation mit einer wäßrigen Magnesiumchlorid/Essigsäure-Lösung, Filtration und Trocknung im Vakuum wird das Pfropfprodukt in Form eines weißen Pulvers erhalten.

B) Pfropfprodukt auf Basis eines Silikonkautschuks mit mittlerem Teilchendurchmesser ($d_{50}$) von 320 nm.

Die Silikonkautschukemulsion wurde wie unter (A) beschrieben hergestellt, jedoch unter Verwendung von 0,90 Gew.-Teilen Dodecylbenzolsulfonsäure und bei einem Druck im Homogenisierungsschritt von ca. 190 bar. Pfropfpolymerisiert wurde wie unter (A) beschrieben.

C) Pfropfprodukt auf Basis eines Kern/Schalen-Silikonkautschuks mit mittlerem Teilchendurchmesser ($d_{50}$) von 325 nm.

Herstellung:

C.1 Silikonemulsion

38,4 Gew.-Teile Octamethylcyclotetrasiloxan, 1,2 Gew.-Teile Tetramethyltetravinylcyclotetrasiloxan und 0,2 Gew.-Teile Tetraethoxysilan werden miteinander verrührt. 0,5 Gew.-Teile Dodecylbenzolsulfonsäure werden zugeführt, anschließend 70 Gew.-Teile Wasser innerhalb 1 Stunde zugegeben. Dabei wird intensiv gerührt. Die Voremulsion wird mit Hilfe einer Hochdruckemulgiermaschine zweimal bei ca. 220 bar homogenisiert. Danach werden weitere 0,5 Gew.-Teile Dodecylbenzolsulfonsäure hinzugegeben. Die Emulsion wird 2 Stunden bei 85°C und anschließend 36 Stunden bei Zimmertemperatur gerührt. Neutralisation erfolgt unter Verwendung von 5 n NaOH. Es resultiert eine stabile Emulsion mit einem Feststoffgehalt von ca. 36 %.

C.2 Mit Acrylatkautschuk umhüllter Silikonkautschuk

In einem Reaktor werden vorgelegt:

2500 Gew.-Teile des unter C.1 beschriebenen Latex
228 Gew.-Teile Wasser.

Bei 70°C gibt man eine Lösung von 3 Gew.-Teilen Kaliumperoxodisulfat in 100 Gew.-Teilen Wasser in den Reaktor ein. Anschließend werden folgende Lösungen innerhalb von 5 Stunden bei 70°C in den Reaktor eindosiert:

Lösung 1:     387 Gew.-Teile n-Butylacrylat
              1 Gew.-Teil Triallylcyanurat
Lösung 2:     500 Gew.-Teile Wasser
              10 Gew.-Teile Natriumsalz von $C_{14}$-$C_{18}$-Alkylsulfonsäuren

Danach wird die Polymerisation innerhalb 4 Stunden bei 70°C zu Ende geführt. Der gebildete Latex enthält das Polymerisat in einer Konzentration von 35 Gew.-%. Das Polymer besteht aus 70 Gew.-% Silikonkautschuk und 30 Gew.-% Acrylatkautschuk.

C.3 Pfropfprodukt

In einem Reaktor werden vorgelegt:

3700 Gew.-Teile des unter C.2 beschriebenen Latex
770 Gew.-Teile Wasser.

Nach Initiierung mit einer Lösung von 3,5 Gew.-Teilen Kaliumperoxodisulfat in 150 Gew.-Teilen Wasser bei 70°C werden folgende Lösungen in den Reaktor innerhalb von 5 Stunden gleichmäßig eingespeist:

Lösung 1:     455 Gew.-Teile Methylmethacrylat
              400 Gew.-Teile Styrol
Lösung 2:     1000 Gew.-Teile Wasser
              30 Gew.-Teile Natriumsalz von $C_{14}$-$C_{18}$-Alkylsulfonsäuren

Anschließend polymerisiert man innerhalb von 4 Stunden bei 70 - 75°C aus. Es resultiert ein Latex mit einem Feststoffgehalt von ca. 33 Gew.-%.

D) Pfropfprodukt auf Basis eines EPDM-Kautschuks (mittlerer Teilchendurchmesser ($d_{50}$) ca. 300 nm):

Handelsprodukt Koblend W 4 der Firma Montedipe, Kautschukgehalt ca. 33 %.

E) Pfropfprodukt auf Basis eines EPDM-Kautschuks (mittlerer Teilchendurchmesser ($d_{50}$) ca. 550 nm):

Handelsprodukt Unibrite UB 400 der Firma Sumitomo.

F) Styrol/Acrylnitril-Copolymerisat (Gewichtsverhältnis 72:28) mit einem mittleren Molekulargewicht (Gewichtsmittel) $\overline{M}w$ von ca. 115 000 und der molekularen Uneinheitlichkeit $\overline{M}w/\overline{M}n$-1 $\leqq$ 2,0

G) α-Methylstyrol/Acrylnitril-Copolymerisat (Gewichtsverhältnis 72:28) mit einem mittleren Molekulargewicht $\overline{M}w$ von ca. 75000 und der molekularen Uneinheitlichkeit $\overline{M}w/\overline{M}n$-1 $\leqq$ 2,0

Die in Tabelle 1 angegebenen Gewichtsmengen von A bis G wurden in einem Innenkneter mit 2 Gewichtsteilen Pentaerythrittetrastearat und 0,1 Gewichtsteilen eines Silikonöls bei ca. 200°C vermischt, wonach das resultierende Gemisch granuliert und anschließend durch Spritzgießen bei 240°C verarbeitet wurde (75 Sekunden-Zyklus).

Die Schlagzähigkeit bei -40°C und Kerbschlagzähigkeit (Zimmertemperatur und -40°C) wurde nach DIN 53 453 (Einheit: $kJ/m^2$) bestimmt, die Wärmeformbeständigkeit (Vicat B) nach DIN 53 460 (Einheit: °C). Die Fließfähigkeit wurde durch Messung des MVI-Wertes nach DIN 53 735 U (Einheit: $cm^3$/10 min.) beurteilt.

Die Prüfdaten der Formmassen sind in Tabelle 2 zusammengestellt.

Tabelle 1 : Zusammensetzungen der Formmassen

| Formmasse | A Gew.-Teile | B Gew.-Teile | C Gew.-Teile | D Gew.-Teile | E Gew.-Teile | F Gew.-Teile | G Gew.-Teile |
|---|---|---|---|---|---|---|---|
| 1 | 22,5 | -- | -- | 34 | -- | 43,5 | -- |
| 2 | -- | 22,5 | -- | 34 | -- | 43,5 | -- |
| 3 | 22,5 | -- | -- | -- | 34 | 43,5 | -- |
| 4 | -- | -- | 22,5 | 34 | -- | 43,5 | -- |
| 5 | -- | 20 | -- | 30,5 | -- | -- | 49,5 |
| 6 | -- | -- | 20 | -- | 30,5 | -- | 49,5 |
| 7 (Vergleich) | -- | 45 | -- | -- | -- | 55 | -- |
| 8 (Vergleich) | -- | -- | -- | 68 | -- | 32 | -- |
| 9 (Vergleich) | -- | 40 | -- | -- | -- | -- | 60 |
| 10 (Vergleich) | -- | -- | -- | 61 | -- | -- | 39 |

EP 0 370 345 B1

Tabelle 2 : Physikalische Eigenschaften der Formmassen

| Formmasse | 20°C $a_k$ | -40°C $a_k$ | -40°C $a_n$ | Vicat B | MVI |
|---|---|---|---|---|---|
| 1 | 18,2 | 7,1 | 74,2 | 95 | 5,1 |
| 2 | 20,3 | 8,7 | 73,4 | 94 | 7,4 |
| 3 | 19,6 | 8,8 | 78,2 | 94 | 7,5 |
| 4 | 21,4 | 7,0 | 63,6 | 93 | 8,2 |
| 5 | 15,3 | 5,0 | 100,4 | 101 | 1,8 |
| 6 | 15,4 | 4,8 | 50,8 | 102 | 2,5 |
| 7 (Vergleich) | 15,4 | 10,6 | 96,5 | 96 | 2,2 |
| 8 (Vergleich) | 20,5 | 3,5 | 69,8 | 92 | 10,2 |
| 9 (Vergleich) | 13,8 | 5,0 | 75,1 | 105 | 0,6 |
| 10 (Vergleich) | 15,2 | 3,9 | 70,4 | 96 | 1,5 |

$a_k$ = Kerbschlagzähigkeit
$a_n$ = Schlagzähigkeit

**Patentansprüche**

1. Formmassen aus

A) 5 bis 95 Gew.-% eines Pfropfproduktes eines Gemisches von 50 bis 100 Gew.-Teilen Styrol, α-Methylstyrol, Vinyltoluol, Methylmethacrylat oder Mischungen daraus und 0 bis 50 Gew.-Teilen Acrylnitril auf einen teilchenförmigen Silikonkautschuk mit einem mittleren Teilchendurchmesser ($d_{50}$) von 0,10 bis 0,50 μm mit einem Gesamtkautschukgehalt von 30 bis 90 Gew.-% und

B) 95 bis 5 Gew.-% eines Pfropfproduktes eines Gemisches von 50 bis 100 Gew.-Teilen Styrol, α-Me-

7

thylstyrol, Vinyltoluol, Methylmethacrylat oder Mischungen daraus und 0 bis 50 Gew.-Teilen Acrylnitril auf einen teilchenförmigen EPDM-Kautschuk mit einem mittleren Teilchendurchmesser ($d_{50}$) von 0,20 bis 1,00 μm mit einem Gesamtkautschukgehalt von 10 bis 50 Gew.-%.

2. Formmassen aus
A) 20 bis 80 Gew.-% eines Pfropfproduktes eines Gemisches von 60 bis 95 Gew.-Teilen Styrol, α-Methylstyrol, Vinyltoluol, Methylmethacrylat oder Mischungen daraus und 5 bis 40 Gew.-Teilen Acrylnitril auf einen teilchenförmigen Silikonkautschuk mit einem mittleren Teilchendurchmesser ($d_{50}$) von 0,10 bis 0,15 μm oder von 0,25 bis 0,50 μm mit einem Gesamtkautschukgehalt von 40 bis 80 Gew.-% und
B) 80 bis 20 Gew.-% eines Pfropfproduktes eines Gemisches von 60 bis 95 Gew.-Teilen Styrol, α-Methylstyrol, Vinyltoluol, Methylmethacrylat oder Mischungen daraus und 5 bis 40 Gew.-Teilen Acrylnitril auf einen teilchenförmigen EPDM-Kautschuk mit einem mittleren Teilchendurchmesser ($d_{50}$) von 0,25 bis 0,40 μm oder von 0,35 bis 0,60 μm mit einem Gesamtkautschukgehalt von 10 bis 40 Gew.-%.

3. Verwendung der Formmassen gemäß Anspruch 1, gegebenenfalls in Mischung mit spröden thermoplastischen Vinylmonomerharzen, als thermoplastische Formmassen.

4. Formmassen nach Anspruch 1,
enthaltend 5 bis 80 Gew.-% der Formmasse gemäß Anspruch 1 und 95 bis 20 Gew.-% eines thermoplastischen Harzes aus 5 bis 40 Gew.-Teilen Acrylnitril und 95 bis 60 Gew.-Teilen Styrol, α-Methylstyrol, p-Methylstyrol, Methylmethacrylat oder Mischungen daraus.

## Claims

1. Moulding compounds of
A) from 5 to 95% by weight of a graft product of a mixture of from 50 to 100 parts by weight of styrene, α-methylstyrene, vinyl toluene, methyl methacrylate or mixtures thereof and from 0 to 50 parts by weight of acrylonitrile on a particulate silicone rubber having an average particle diameter ($d_{50}$) of from 0.10 to 0.50 μm with a total rubber content of from 30 to 90% by weight and
B) from 95 to 5% by weight of a graft product of a mixture of from 50 to 100 parts by weight of styrene, α-methylstyrene, vinyl toluene, methyl methacrylate or mixtures thereof and from 0 to 50 parts by weight of acrylonitrile on a particulate EPDM rubber having an average particle diameter ($d_{50}$) of from 0.20 to 1.00 μm with a total rubber content of from 10 to 50% by weight.

2. Moulding compounds of
A) from 20 to 80% by weight of a graft product of a mixture of from 60 to 95 parts by weight of styrene, α-methylstyrene, vinyl toluene, methyl methacrylate or mixtures thereof and from 5 to 40 parts by weight of acrylonitrile on a particulate silicone rubber having an average particle diameter ($d_{50}$) of from 0.10 to 0.15 μm or from 0.25 to 0.50 μm with a total rubber content of from 40 to 80% by weight and
B) from 80 to 20% by weight of a graft product of a mixture of from 60 to 95 parts by weight of styrene, α-methylstyrene, vinyl toluene, methyl methacrylate or mixtures thereof and from 5 to 40 parts by weight of acrylonitrile on a particulate EPDM rubber having an average particle diameter ($d_{50}$) of from 0.25 to 0.40 μm or from 0.35 to 0.60 μm with a total rubber content of from 10 to 40% by weight.

3. Use of the moulding compounds according to Claim 1, optionally in admixture with brittle thermoplastic vinyl monomer resins, as thermoplastic moulding compounds.

4. Moulding compounds according to Claim 1, containing from 5 to 80% by weight of the moulding compound according to Claim 1 and from 95 to 20% by weight of a thermoplastic resin of from 5 to 40 parts by weight of acrylonitrile and from 95 to 60 parts by weight of styrene, α-methylstyrene, p-methylstyrene, methyl methacrylate or mixtures thereof.

## Revendications

1. Mélanges à mouler comprenant
A) 5 à 95 % en poids d'un produit de greffage d'un mélange de 50 à 100 parties en poids de styrène, d'α-méthylstyrène, de vinyltoluène, de méthacrylate de méthyle ou de mélanges de ces composés et de 0 à 50 parties en poids d'acrylonitrile sur un caoutchouc de silicone en particules ayant un diamètre moyen ($d_{50}$) de particules de 0,10 à 0,50 µm avec une teneur totale en caoutchouc de 30 à 90 % en poids et

B) 95 à 5 % en poids d'un produit de greffage d'un mélange de 50 à 100 parties en poids de styrène, d'α-méthylstyrène, de vinyltoluène, de méthacrylate de méthyle ou de mélanges de ces composés et de 0 à 50 parties en poids d'acrylonitrile sur un caoutchouc EPDM en particules ayant un diamètre moyen ($d_{50}$) des particules de 0,20 à 1,00 µm avec une teneur totale en caoutchouc de 10 à 50 % en poids.

2.   Mélanges à mouler comprenant

A) 20 à 80 % en poids d'un produit de greffage d'un mélange de 60 à 95 parties en poids de styrène, d'α-méthylstyrène, de vinyltoluène, de méthacrylate de méthyle ou de mélanges de ces composés et de 5 à 40 parties en poids d'acrylonitrile sur un caoutchouc de silicone en particules ayant un diamètre moyen ($d_{50}$) des particules de 0,10 à 0,15 µm ou de 0,25 à 0,50 µm avec une teneur totale en caoutchouc de 40 à 80 % en poids

et

B) 80 à 20 % en poids d'un produit de greffage d'un mélange de 60 à 95 parties en poids de styrène, d'α-méthylstyrène, de vinyltoluène, de méthacrylate de méthyle ou de mélanges de ces composés et de 5 à 40 parties en poids d'acrylonitrile sur un caoutchouc EPDM en particules ayant un diamètre moyen ($d_{50}$) des particules de 0,25 à 0,40 µm ou de 0,35 à 0,60 µm et une teneur totale en caoutchouc de 10 à 40 % en poids.

3.   Utilisation des mélanges à mouler suivant la revendication 1, éventuellement en mélange avec des résines de monomères vinyliques thermoplastiques cassantes, comme mélanges à mouler thermoplastiques.

4.   Mélanges à mouler suivant la revendication 1, contenant 5 à 80 % en poids du mélange à mouler suivant la revendication 1 et 95 à 20 % en poids d'une résine thermoplastique composée de 5 à 40 % en poids d'acrylonitrile et 95 à 60 parties en poids de styrène, d'α-méthylstyrène, de p-méthylstyrène, de méthacrylate de méthyle ou de mélanges de ces composés.